# EUROPÄISCHE PATENTANMELDUNG

(11) **EP 2 184 575 A2**
(43) Veröffentlichungstag der Anmeldung: **12.05.2010**
(21) Anmeldenummer: 09013861.1
(22) Anmeldetag: 04.11.2009
(51) Int. Cl.: F28G 15/04, F28G 1/16, F28D 9/00

(54) **Wärmetauschereinheit mit Reinigungsvorrichtung für eine Wärmenutzungsanlage**

(30) Priorität: 07.11.2008 CN 200810174464
(71) Anmelder: Helmut Bälz GmbH, D-74076 Heilbronn (DE)
(72) Erfinder: Ehrhardt, Gerd, 52076 Aachen (DE); Tringali, Sergio Laudati, 08191 Rubi Barcelona (ES)
(74) Vertreter: Rüger, Barthelt & Abel Patentanwälte

(57) **Zusammenfassung**

Eine erfindungsgemäße Wärmetauschereinheit weist mehrere Düsen auf, die gleichzeitig auf eine Seitenfläche eines Plattenwärmetauschers ausgerichtet sind, an der ein Port desselben angeordnet ist. Die Reinigung des Abluftweges kann auf diese Weise durch Einsprühen eines Reinigungsfluids möglichst auf ganzer Breite des Ports erreicht werden. Sie ist besonders effizient, wenn der Plattenwärmetauscher schrittweise um 180° gedreht wird, wenn die Reinigungsrichtung also schrittweise umgekehrt wird. Durch Drehen um 90° kann auch der Zuluftweg gereinigt werden. Dies spart eventuell einen Zuluftfilter.

## Beschreibung

Die Erfindung betrifft eine Wärmetauschereinheit für eine Wärmenutzungsanlage insbesondere in Form einer Textilmaschine. In der Industrie sind die vielfältigsten Formen von Wärmenutzungsanlagen in Gebrauch. Häufig werden zur Bearbeitung oder Behandlung von Produkten wärmetragende Fluidströme eingesetzt, die in den Prozess hinein und aus diesem heraus zu schleusen sind. Um Wärmeverluste zu minimieren, wird häufig das Prinzip angewendet, das zuströmende Medium und das abströmende Medium im Gegenstrom in Wärmeaustausch zu bringen.

Beispielsweise offenbart dazu die WO 2006/021164 A1 einen Rohr-Wärmetauscher zum Einsatz an einer Textilbehandlungseinrichtung in Gestalt eines sogenannten Spannrahmens, in dem eine textile Stoffbahn zum Trocknen und/oder Fixieren mit erhitzter Luft behandelt wird. In der Einrichtung kann die erhitzte Luft beim Trocken- bzw. Fixierprozess, je nach Vorbehandlung der Stoffbahn, mehr oder weniger stark verunreinigt werden. Deshalb ist zumindest ein Teil der im Allgemeinen im Kreislauf geführten Luft bzw. Umluft ständig durch Frischluft auszutauschen. Zur Wärmerückgewinnung der auszutauschenden Luft wird ein Wärmetauscher eingesetzt. Die durch ihn strömende Abluft ist mit Schmutz beladen und kann somit den Wärmetauscher nach und nach verschmutzen. Dies senkt seine Effizienz und erhöht seinen Strömungswiderstand.

Um von Zeit zu Zeit Verschmutzungen entfernen zu können, ist an dem Wärmetauscher eine Rohrreinigungsvorrichtung vorgesehen, die einen automatisch gesteuerten Betrieb erlaubt und somit Handarbeit oder Demontagen nicht erfordert. Sie umfasst wenigstens einen nacheinander in jedes Rohr einfädelbaren Hochdruckschlauch, der dazu dient, unter Druck stehendes Reinigungsfluid in das Rohr einzubringen. Die Ablagerungen werden so gelöst und ausgeschwemmt.

Das Reinigen des Wärmetauschers mittels eines in die einzelnen Rohre einzuschiebenden Schlauchs ist aufwendig.

Davon ausgehend, ist es Aufgabe der Erfindung eine Wärmetauschereinheit anzugeben, die verbessert ist.

Die erfindungsgemäße Wärmetauschereinheit umfasst einen Wärmetauscher, der in Nachbarschaft mindestens einer Reinigungsdüse angeordnet ist. Die Reinigungsdüse ist dazu eingerichtet, ein Reinigungsfluid, wie beispielsweise Heißwasser, Dampf oder ein Wasser/Dampf-Gemisch in den Wärmetauscher zu injizieren. Die Reinigungsdüse wird dazu nicht in den Wärmetauscher eingeführt. Vielmehr strahlt sie das Reinigungsfluid in Richtung auf einen Port des Wärmetauschers, so dass es in den betreffenden Kanal desselben gelangt. Unter "Port" wird dabei ein Eingang oder ein Ausgang eines seiner Kanäle beispielsweise seines Zuluftkanals und/oder seines Abluftkanals verstanden. Wird als Reinigungsfluid Heißwasser verwendet, verdampft das Wasser teilweise und es entsteht ein Wasser/Dampf-Gemisch. Das entstehende Wasser/Dampf-Gemisch hat eine gute Reinigungswirkung und säubert den betroffenen Kanal.

Bei einer besonders vorteilhaften Ausführungsform sind der Wärmetauscher und die Reinigungsdüse in Bezug aufeinander in unterschiedliche Positionen überführbar, so dass die Reinigungsdüse verschiedene Ports des Wärmetauschers erreichen kann. Die verschiedenen Relativpositionen können erreicht werden, indem die Reinigungsdüsen relativ zu dem Wärmetauscher bewegt werden. Es ist auch möglich, den Wärmetauscher relativ zu den Düsen zu bewegen. Weiter ist es möglich, sowohl die Düsen als auch den Wärmetauscher relativ zueinander zu bewegen. Eine weitere Alternative ist es, jeweils in der Nähe zweier oder mehrerer Ports des Wärmetauschers jeweils mindestens eine Düse vorzusehen, wobei diese Düsen dann einzeln oder gruppenweise aktivierbar sind. Durch jede dieser Maßnahmen kann erreicht werden, dass verschiedene Kanäle des Wärmetauschers, also beispielsweise der aus gegebenenfalls mehreren Einzelkanälen bestehende Abluftkanal oder der aus gegebenenfalls mehreren Einzelkanälen bestehende Zuluftkanal, gespült wird. Dabei werden Ablagerungen entfernt. Außerdem kann durch die Relativbewegung von Düsen und Wärmetauscher oder alternativ unterschiedliche Aktivierung verschiedener Düsen bewirkt werden, dass Kanäle des Wärmetauschers in verschiedene Richtungen, auch einander entgegengesetzten Richtngen von Reinigungsfluid durchströmt werden.

Als Wärmetauscher wird vorzugsweise ein Plattenwärmetauscher eingesetzt. Dieser weist eine hohe Effizienz hinsichtlich der Wärmeübertragungsfähigkeit auf. Seine spaltförmigen Einzelkanäle erzeugen einen geringen Strömungswiderstand und lassen sich gut reinigen. Insbesondere sind die weit offenen Ports des Plattenwärmetauschers gut geeignet einen Reinigungsfluidstrahl aufzunehmen, der in einem gegebenen Abstand zu dem Port außerhalb des eigentlichen Plattenwärmetauschers injiziert wird.

Während der Reinigung ist der Plattenwärmetauscher vorzugsweise in Ruhe. Alternativ kann er dabei aber auch bewegt werden. Auch auf andere Weise, beispielsweise durch Bewegung der Düse quer zur Strahlaustrittsrichtung, ist eine Relativbewegung zwischen Düse und Wärmetauscher erzielbar. Eine solche Relativbewegung kann im Einzelfall während des Reinigungsvorgangs die Reinigungswirkung unterstützen.

Die Positioniervorrichtung zur Bewegung des Wärmetauschers (oder der Düsen) ist vorzugsweise eine Drehvorrichtung. Diese Drehvorrichtung dreht den Plattenwärmetauscher vorzugsweise um eine Achse, die zu seinen Platten senkrecht steht. Wenn diese Drehvorrichtung zwei Drehpositionen unterscheidet die sich um 180° gegenüberliegen, und wenn der Wärmetauscher Ports an einander gegenüber liegenden Seiten hat, die durch einen Kanal verbunden sind, kann der betroffene Kanal in zwei einander entgegen gesetzten Richtungen durchströmt werden. Dies kann die Reinigungswirkung fördern.

Vorzugsweise ist der Plattenwärmetauscher quaderförmig ausgebildet, wobei er Ports an allen vier Flanken (Seitenflächen) aufweist. Diese vier Flanken können beispielsweise durch Drehung in 90° Schritten vor die Mündung einer Reinigungsdüse oder die Mündungen einer Reinigungsdüsengruppe gebracht werden. Die Düse kann dann in Dauerbetrieb oder in intermittierendem Betrieb aktiviert werden, um die Reinigung zu bewirken. Im Falle einer Düsengruppe können die Düsen gleichzeitig dauernd oder intermittierend oder auch einzeln und abwechselnd oder in Teilgruppen abwechselnd aktiviert werden, um die Reinigungswirkung gegebenenfalls unter Minimierung des Heißwassers oder Dampfverbrauchs zu fördern.

In einer bevorzugten Ausführungsform ist der Wärmetauscher in einem Gehäuse drehbar oder auf andere Weise positionierbar angeordnet. Dieses Gehäuse dient der Zu- und Abführung von Fluid, wie beispielsweise Zuluft und Abluft zu dem Wärmetauscher. Das Gehäuse weist Dichtungen auf, die jeweils um einen Port des Wärmetauschers herum abdichten können. Vorzugsweise handelt es sich dabei um gezielt aktivierbare oder deaktivierbare Dichtungen, wie beispielsweise durch Druckluft expandierbare flexible Schlauchdichtungen.

Weitere Einzelheiten vorteilhafter Ausführungsformen der Erfindung gehen aus der Beschreibung der Zeichnung oder Unteransprüchen hervor. Die Beschreibung beschränkt sich auf wesentliche Aspekte der Erfindung und sonstige Gegebenheiten. Die Zeichnung ist ergänzend heranzuziehen. Es zeigen:
Figur 1 einen industriellen Wärmeverbraucher mit angeschlossener Wärmetauschereinheit, in schematisierter Darstellung.
Figur 2 die Wärmetauschereinheit nach Figur 1, in einer weiteren stark schematisierten Darstellung.
Figur 3 die Wärmetaschereinheit nach Figur 2, in ausschnittsweiser Darstellung in Betrieb.
Figur 4 die Wärmetauschereinheit nach Figur 3, in ausschnittsweiser Darstellung während einer Reinigungsphase.
Figur 5 und 6 eine Dichtung der Wärmetauschereinheit, in Betriebspositionen entsprechend Figur 3 und Figur 4 und
Figur 7 eine abgewandelten Ausführungsform der Erfindung mit ruhend angeordneter Reinigungsdüse und ruhendem Wärmetauscher.

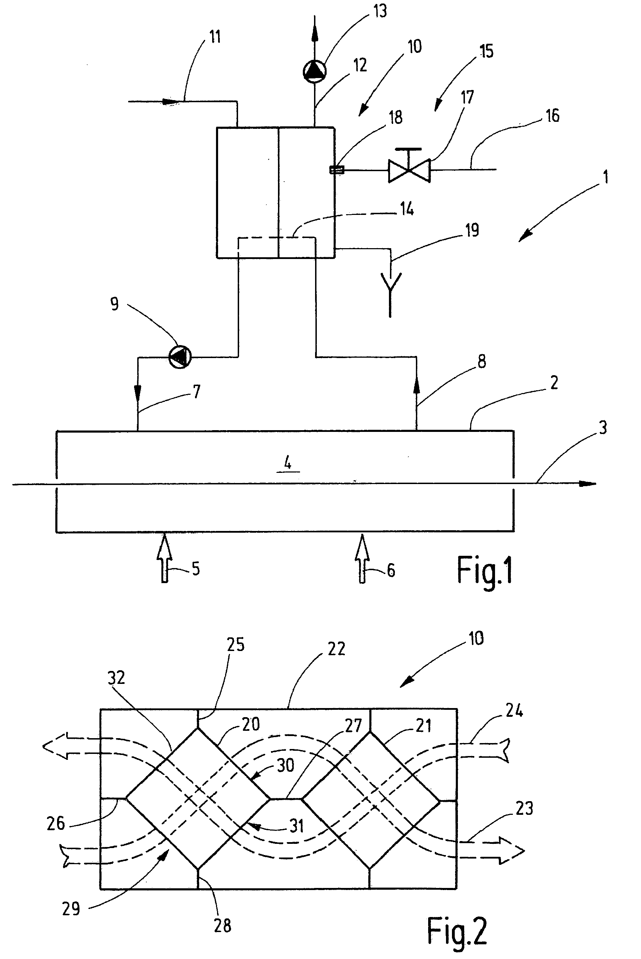

In Figur 1 ist eine Wärmenutzungsanlage 1 veranschaulicht, zu der hier beispielhaft eine Textilbehandlungseinrichtung 2 gehört. Diese wird von einer Textilbahn 3 durchlaufen. Die Textilbahn 3 wird in einem von der Textilbehandlungseinrichtung 2 umschlossenen Raum 4 einer definierten Atmosphäre ausgesetzt, die beispielsweise aus aufgeheizter Luft besteht. Der in dem Raum 4 herrschenden Atmosphäre kann Wärme zugeführt werden. Eine entsprechende Heizeinrichtung ist nicht weiter veranschaulicht. Die Wärmezufuhr wird in Figur 1 durch Pfeile 5, 6 symbolisiert.

Der Textilbehandlungseinrichtung 2 wird über eine Leitung 7 heiße, saubere und trockene Luft zugeführt. Über eine Leitung 8 wird Abluft abgeführt. Diese ist heiß und, weil sie Wasser aus der Textilbahn 3 aufgenommen hat, feucht.

In der Leitung 7 sitzt ein Gebläse 9, das die saubere, heiße Zuluft in den Raum 4 fördert. Zusätzlich oder alternativ kann ein entsprechendes Gebläse in der Leitung 8 vorgesehen sein.

Die Zuluft und die Abluft werden durch eine Wärmetauschereinheit 10 in Wärmeaustausch gebracht. Die Wärmetauschereinheit 10 erhält über eine Leitung 11 Frischluft aus der Umgebung. Über eine Leitung 12 wird gekühlte und gegebenenfalls entschmutzte Abluft abgeführt. Ein Gebläse 13 fördert diese Abluft zu einem Abluftausgang oder Kamin.

Die Wärmetauschereinheit 10 kann im Einzelfall auch einen in Figur 1 symbolisch durch eine gepunktete Linie 14 angedeuteten Bypasskanal aufweisen, um einen Teil der über die Leitung 8 aus der Textilbehandlungseinrichtung 2 geleiteten Abluft über die Leitung 7 in den Raum 4 zurückzugeben und somit eine Kreislaufströmung zu erreichen. Dieser Bypass ist optional; vorzugsweise entfällt er.

Die Wärmetauschereinheit 10 weist eine Reinigungseinrichtung 15 auf, über die hier ein Reinigungsfluid zugeführt werden kann. Ein solches Reinigungsfluid ist beispielsweise dann Warmwasser oder Heißwasser, das über eine Leitung 16 und ein Ventil 17 zu zumindest einer Düse 18 geleitet wird. In der Wärmetauschereinheit anfallendes Kondensat kann über eine entsprechende Leitung 19 abgeführt werden.

Figur 2 veranschaulicht die Wärmetauschereinheit 10, die im vorliegenden Ausführungsbeispiel zwei Plattenwärmetauscher 20, 21 aufweist. Diese sind in einem äußeren Gehäuse 22 angeordnet, das den Zuluftstrom 23 und den Abluftstrom 24 kanalisiert. Dazu enthält das Gehäuse 22 Zwischenwände 25, 26, 27, 28, die in dem Gehäuse 22 Kammern abteilen und die Luft zu den Ports der Plattenwärmetauscher 20, 21 kanalisieren. Die Ports werden durch einen Zulufteingang 29, einen Zu-luftausgang 30, einen Ablufteingang 31 und einen Ablaufausgang 32 gebildet. Der Plattenwärmetauscher 20 ist ein Kreuzstromwärmetauscher. Er weist einen Zuluftkanal auf, der den Zulufteingang 29 und den Zuluftausgang 30 miteinander verbindet. Er wiest einen Abluftkanal auf, der den Ablufteingang 31 mit dem Abluftausgang 32 verbindet. Beide Kanäle haben eine um 90° gegeneinander verschiedene Durchströmungsrichtung. Der Zulufteingang 29 liegt an einer dem Zuluftausgang 30 gegenüberliegenden Seite des quaderförmigen Gehäuses des Plattenwärmetauschers 20. Der Ablufteingang 31 liegt an einer dem Abluftausgang 32 gegenüber liegenden Seite des Gehäuses des Plattenwärmetauschers 20. Der Plattenwärmetauscher 20 weist eine vorzugsweise im Wesentlichen quadratische Boden- und Deckfläche auf. An seinen vier Seitenflächen sind die Ports angeordnet.

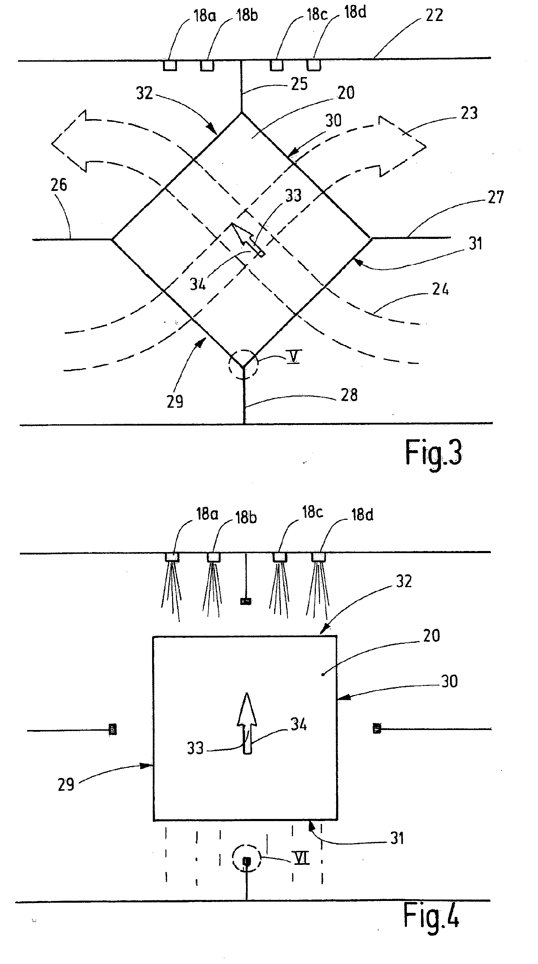

In dem Außengehäuse 22 ist zumindest eine Düse 18, oder wie Figur 3 veranschaulicht, eine Gruppe von Düsen 18a, b, c, d angeordnet. Diese Düsen 18a bis 18d sind in einigem Abstand zu Ports des Plattenwärmetauschers 20 beispielsweise im Abstand zu seinem Abluftauslass 32 und seinem Zuluftauslass 30 in einer Linie oder anders gruppiert angeordnet.

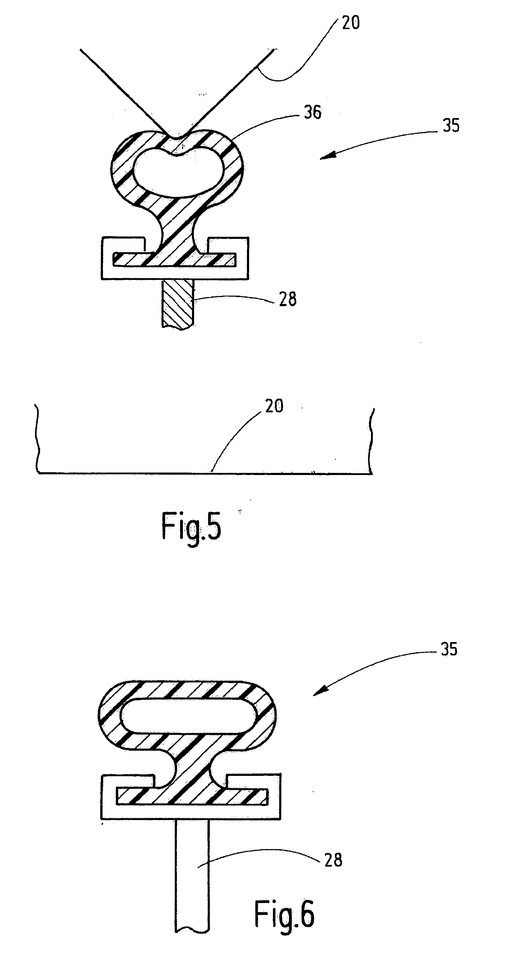

Der Plattenwärmetauscher 20 ist um eine Dreh- oder Schwenkachse 33 drehbar, die senkrecht zu dem Abluftstrom 24 wie auch zu dem Zuluftstrom 23 steht. Die Ausrichtung des Plattenwärmetauschers 20 ist in Figur 3 durch einen Pfeil 34 veranschaulicht. Ein nicht weiter veranschaulichter Antrieb kann die Drehung des Plattenwärmetauschers 20 bewirken. Vorzugsweise kann er in 90° Schritten um die Drehachse 33 gedreht und auch in Zwischenpositionen gemäß Figur 4 fixiert werden. In den Positionen nach Figur 3 schließen die Ecken des Plattenwärmeaustauschers 20 jeweils an die Zwischenwände 25, 26, 27, 28 an zur Abdichtung sind hier aktive Dichtungen vorgesehen, wie sie in den Figuren 5 und 6 veranschaulicht sind. Eine solche Dichtung 35 weist einen expandierbaren Körper 36 beispielsweise in Form eines Silikonschlauchs auf, der einerseits an einer der Zwischenwände 25, 26, 27, 28 gefasst und andererseits expandierbar ist. Sein Innenraum kann dazu mit Druckluft beaufschlagt werden, so dass sich der Körper 36 an die Ecke des Plattenwärmetauschers 20 anlegt.

Figur 6 veranschaulicht die Dichtung 35 in ihrem passiven, nicht aktivierten Zustand.

Die insoweit beschriebene Wärmetauschereinheit 10 arbeitet wie folgt:

In Betrieb haben die Plattenwärmetauscher 20, 21 die in Figur 2 veranschaulichte Position. Sie leiten den Zuluftstrom 23 und den Abluftstrom 24 im Kreuzstrom und bringen dabei beide Luftströme in Wärmeaustausch. Während der Zuluftstrom 23 erwärmt wird, wird der Abluftstrom 24 abgekühlt.

Weil der Abluftstrom 24 schmutzbeladen sein kann, ist damit zu rechnen, dass sich in den spaltförmigen Teilkanälen des Abluftkanals nach und nach Ablagerungen bilden. Um diese zu beiseitigen, kann der Wärmetauscher 20 gereinigt werden. Dazu kann er aus der Betriebsposition gemäß Figur 3 in die Reinigungsposition nach Figur 4 überführt werden. Dazu wird der Plattenwärmetauscher 20 um etwa 45° (d.h. eine Achteldrehung) um die vorzugsweise horizontal angeordnete Drehachse 33 gedreht, die vorzugsweise senkrecht auf seinen quadratischen Flachseiten (Bodenfläche und Deckfläche) steht. Somit liegt im vorliegenden Betriebsbeispiel der Abluftausgang 32 unmittelbar den Reinigungsdüsen 18a bis 18d gegenüber. Diese können nun einzeln oder gemeinsam, gleichzeitig oder zeitversetzt aktiviert werden. Vorzugsweise geben sie Heißwasser ab, das durch seinen inneren Wärmegehalt und die plötzliche Entspannung teilweise verdampft so dass ein Dampf-Wasser-Luftgemisch entsteht. Dieses tritt in den Abluftausgang 32 ein und durchströmt den Abluftkanal in einer gegebenen Richtung vorzugsweise vertikal von oben nach unten. Aus dem Abluftkanal gelöster Schmutz und Kondenswasser läuft nach unten ab und wird von dem Außengehäuse 22 aufgefangen und über den Kondensatablass 19 ausgeleitet.

Der Abluftkanal kann auch in Gegenrichtung gereinigt werden. Dazu wird der Plattenwärmetauscher 20 um 180° um die Drehachse 33 geschwenkt, so dass der Ablufteingang 31 unterhalb der Düsen 18a bis 18d steht und diesem gegenüber liegt. somit wird bei Aktivierung der Düsen 18a bis 18d wiederum der Abluftkanal nun aber in Gegenrichtung durchströmt und gereinigt.

Dieser Vorgang kann bedarfsweise mehrfach wiederholt werden.

Durch eine weitere Drehung um 90° können der Zulufteingang 29 und der Zuluftausgang 30 bedarfsweise ebenfalls den Düsen 18a bis 18d gegenüberliegend positioniert, in Richtung und Gegenrichtung durchströmt und gereinigt werden.

Um den normalen Betrieb wieder aufzunehmen, wird der Plattenwärmertauscher 20 in die Position nach Figur 3 rücküberführt, womit er seinen Betrieb fortsetzen kann.

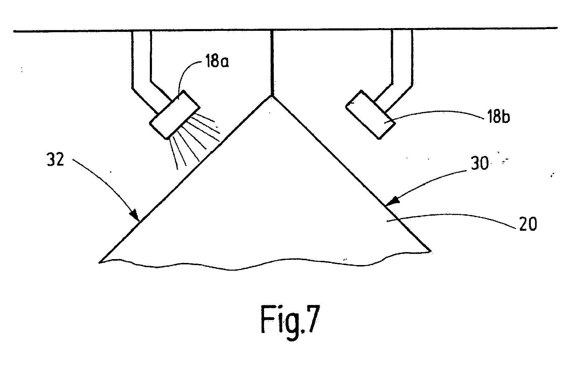

Es sei angemerkt, dass der Wärmetauscher 20 auch ruhend montiert werden kann. Um mehrere Ports zu erreichen, können die Reinigungsdüsen 18a bis 18d beweglich angeordnet werden. Alternativ ist es möglich, gemäß Figur 7 sowohl den Plattenwärmetauscher 20 als auch Düsen 18a, 18b ortsfest im Abstand beispielsweise zu dem Abluftauslass 32 und dem Zuluftauslass 30 zu lagern. Die Düsen 18a, 18b können gleichzeitig oder abwechselnd aktiviert werden und sprühen dabei das jeweilige Reinigungsfluid, beispielsweise teilweise verdampftes Heißwasser in das jeweils gegenüberliegende Port des Plattenwärmetauschers 20, um diesen zu reinigen.

Eine erfindungsgemäße Wärmetauschereinheit weist mehrere Düsen auf, die gleichzeitig auf eine Seitenfläche eines Plattenwärmetauschers ausgerichtet sind, an der ein Port desselben angeordnet ist. Die Reinigung des Abluftweges kann auf diese Weise durch Einsprühen von Reinigungsfluids möglichst auf ganzer Breite des Ports erreicht werden. Sie ist besonders effizient, wenn der Plattenwärmetauscher schrittweise um 180° gedreht wird, wenn die Reinigungsrichtung also schrittweise umgekehrt wird. Durch Drehen um 90° kann auch der Zuluftweg gereinigt werden. Dies spart eventuell einen Zuluftfilter.

### Bezugszeichen

- 1: Wärmenutzungsanlage
- 2: Textilbehandlungseinrichtung
- 3: Textilbahn
- 4: Raum
- 5, 6: Pfeile
- 7, 8: Leitung
- 9: Gebläse
- 10: Wärmetauschereinheit
- 11, 12: Leitung
- 13: Gebläse
- 14: Bypasskanal
- 15: Reinigungseinrichtung
- 16: Leitung
- 17: Ventil
- 18: Düse 18a - 18d
- 19: Kondensatablass
- 20, 21: Plattenwärmetauscher
- 22: Außengehäuse
- 23: Zuluftstrom
- 24: Abluftstrom
- 25-28: Zwischenwände
- 29: Zulufteingang
- 30: Zuluftausgang
- 31: Ablufteingang
- 32: Abluftausgang
- 33: Drehachse
- 34: Pfeil
- 35: Dichtung
- 36: Körper

## Patentansprüche

1. Wärmetauschereinheit (10) für eine Wärmenutzungsanlage (1), insbesondere für eine Textilmaschine oder Textilbehandlungseinrichtung,
mit mindestens einem Wärmetauscher (20), der sowohl mindestens einen Ablufteingang (31) als auch mindestens einen Abluftausgang (32) aufweist, die durch einen von Abluft durchströmten Abluftkanal verbunden sind,
mit mindestens einer Reinigungsdüse (18), die in Nachbarschaft des Wärmetauschers (20) angeordnet ist und deren Mündung auf den Wärmetauscher (20) hin weist.

2. Wärmetauschereinheit nach Anspruch 1**, dadurch gekennzeichnet, dass** eine Positioniervorrichtung vorgesehen ist, mittels derer der Wärmetauscher (20) oder die Reinigungsdüse (18) in wenigstens zwei unterschiedliche Positionen überführbar ist, um alternativ den Ablufteingang (31) oder den Abluftausgang (32) der Reinigungsdüse (18) gegenüberliegend zu positionieren.

3. Wärmetauschereinheit nach Anspruch 1, **dadurch gekennzeichnet, dass** der Wärmetauscher (20) ein Plattenwärmetauscher ist.

4. Wärmetauschereinheit nach Anspruch 1, **dadurch gekennzeichnet, dass** der Wärmetauscher (20) zusätzlich zu dem Abluftkanal einen Zuluftkanal aufweist, der einen Zulufteingang (29) und einen Zuluftausgang (30) aufweist.

5. Wärmetauschereinheit nach Anspruch 1, **dadurch gekennzeichnet, dass** der Wärmetauscher (20) ein Kreuzstromwärmetauscher ist.

6. Wärmetauschereinheit nach Anspruch 1, **dadurch gekennzeichnet, dass** der Ablufteingang (31) und der Abluftausgang (32) an dem Wärmetauscher (20) einander gegenüberliegend angeordnet sind.

7. Wärmetauschereinheit nach Anspruch 1, **dadurch gekennzeichnet, dass** die Positioniervorrichtung eine Drehvorrichtung ist, mit der der Wärmetauscher (20) in zumindest zwei verschiedene Drehpositionen überführbar ist.

8. Wärmetauschereinheit nach Anspruch 7, **dadurch gekennzeichnet, dass** sich die beiden Drehpositionen gegeneinander um eine Drehung von 180° unterscheiden.

9. Wärmetauschereinheit nach Anspruch 7, **dadurch gekennzeichnet, dass** der zwischen dem Ablufteingang (31) und dem Abluftausgang (32) vorhandene Abluftkanal eine Durchströmungsrichtung festlegt und dass der Wärmetauscher (20) um eine Drehachse (33) schwenk- oder drehbar ist, die zu der Durchströmungsrichtung rechtwinklig festgelegt ist.

10. Wärmetauschereinheit nach Anspruch 4, **dadurch gekennzeichnet, dass** der Zulufteingang (29) und der Zuluftausgang (30) an dem Wärmetauscher (20) einander gegenüberliegend angeordnet sind.

11. Wärmetauschereinheit nach Anspruch 1, **dadurch gekennzeichnet, dass** der Zulufteingang (29), der Ablufteingang (31), der Zuluftausgang (30) und der Abluftausgang (32) an vier verschiedenen Seiten des quaderförmig ausgebildeten Wärmetauschers (20) angeordnet sind.

12. Wärmetauschereinheit nach Anspruch 1, **dadurch gekennzeichnet, dass** der Wärmetauscher (20) in einem Gehäuse (22) beweglich angeordnet ist, das durch Stege (25, 26, 27, 28) in Kammern unterteilt ist, die Luftzuführungskanäle und Luftableitungskanäle festlegen.

13. Wärmetauschereinheit nach Anspruch 13, **dadurch gekennzeichnet, dass** an zwischen den Stegen (25, 26, 27, 28) und dem Wärmetauscher (20) Dichtungen (35) wirksam sind.

14. Wärmetauschereinheit nach Anspruch 13, **dadurch gekennzeichnet, dass** die Dichtungen (35) gesteuert aktivierbar und deaktivierbar sind.

15. Verfahren zum Reinigen eines Wärmetauschers (20) mittels eines aus zumindest einer Düse (18) austretenden Fluidstrahls, bei dem der Wärmetauscher (20) zwischen einer Betriebspositionen und einer Reinigungsposition bewegt wird.

16. Verfahren nach Anspruch 15, **dadurch gekennzeichnet, dass** der Fluidstrahl durch ein Wasser/Dampf-Gemisch gebildet wird.
